# EUROPÄISCHE PATENTSCHRIFT

(11) **EP 0 876 033 B1**
(45) Veröffentlichungstag und Bekanntmachung des Hinweises auf die Patenterteilung: **27.07.2005**
(21) Anmeldenummer: 98201201.5
(22) Anmeldetag: 15.04.1998
(51) Int. Cl.: H04L 29/06, H04N 7/62

(54) **Übertragungssystem mit Synchronisation von Datenströmen**
Transmission system with data streams synchronization
Système de transmission avec synchronisation des fluxes de données

(30) Priorität: 25.04.1997 DE 19717548
(43) Veröffentlichungstag der Anmeldung: 04.11.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Helbig, Tobias, Dr., Röntgenstrasse 24, 22335 Hamburg (DE)
(74) Vertreter: Volmer, Georg, Dipl.-Ing.

(56) Entgegenhaltungen:
- HELBIG T ET AL: "SYNCHRONISATION MULTIMEDIALER DATENSTROEME" IT + TI INFORMATIONSTECHNIK UND TECHNISCHE INFORMATIK, Bd. 37, Nr. 4, 1. August 1995, Seiten 18-25, XP000597623
- ROTHERMEL K ET AL: "CLOCK HIERARCHIES: AN ABSTRACTION FOR GROUPING AND CONTROLLING MEDIA STREAMS" IEEE JOURNAL ON SELECTED AREAS IN COMMUNICATIONS, Bd. 14, Nr. 1, 1. Januar 1996, Seiten 174-184, XP000548820
- ESCOBAR J ET AL: "FLOW SYNCHRONIZATION PROTOCOL" COMMUNICATION FOR GLOBAL USERS, ORLANDO, DEC. 6 - 9, 1992, Bd. VOL. 3, Nr. -, 6. Dezember 1992, Seiten 1381-1387, XP000390435 INSTITUTE OF ELECTRICAL AND ELECTRONICS ENGINEERS
- FURHT B: "MULTIMEDIA SYSTEMS: AN OVERVIEW" IEEE MULTIMEDIA, Bd. 1, Nr. 1, 21. März 1994, Seiten 47-59, XP000440888

## Beschreibung

Die Erfindung betrifft ein Übertragungssystem mit mehreren Netzelementen zur Übertragung mehrerer Dateneinheiten von mindestens einer Datenquelle eines Netzelements zu mindestens einem weiteren Netzelement mit einer Datensenke und einem Datenpuffer, wobei zweite Mittel zur Zeitsteuerung der Datenübertragung vom Datenpuffer zur Datensenke vorgesehen sind.

Derartige Übertragungssysteme, die beispielsweise aus der Broschüre "Avid AirPlay MP", Avid Technology, 1996 bekannt sind, werden beispielsweise bei Nachrichtensendern eingesetzt zum Erstellen hochwertiger Nachrichtenbeiträge z.B. für TV-Nachrichtensendungen. Vorhandenes Nachrichtenmaterial (z.B. Audio-/Video-Daten, Textbeiträge, Bilder,....) ist an verschiedenen Stellen eines Netzwerkes auf unterschiedlichen, miteinander verbundenen Netzelementen (Servern, Workstations, Datenspeichern) abgelegt. Zum Recherchieren in dem vorhandenen Nachrichtenmaterial und zum Erstellen der Nachrichtenbeiträge, die hohen Qualitätsanforderungen genügen müssen und was aus Aktualitätsgründen meist unter großem Zeitdruck erfolgt, muß das Übertragungssystem bestimmte Funktionalitäten bereitstellen. Dazu gehören insbesondere der Einzelschrittmodus (Single Step Mode), bei dem einzelne Dateneinheiten (z.B. Einzelbilder einer Videosequenz) vom Benutzer angefordert werden, und der kontinuierliche Ausgabemodus (Streaming Mode), bei dem die kontinuierliche Ausgabe einer Folge von Dateneinheiten angefordert wird, wobei der Benutzer nur Start und Stop bestimmt, nicht jedoch die zeitliche Steuerung der kontinuierlichen Datenausgabe. Hinzu kommt, daß Dateneinheiten auf unterschiedlichen Netzelementen abgelegt sind und daß oftmals zusätzliche Anforderungen wie beispielsweise die zeitgleiche Ausgabe derselben Daten auf unterschiedlichen Netzelementen angefordert wird.

Aus dem Dokument "HELBIG T ET AL: 'SYNCHRONISATION MULTIMEDIALER DATENSTROEME' IT + TI INFORMATIONSTECHNIK UND TECHNISCHE INFORMATIK, Bd. 37, Nr. 4, 1. August 1995, Seiten 18-25, XP000597623" ist ein Übertragungssystem mit einer Quell, einem Übertragungskanal, einem Ausgabepuffer und einer Senke bekannt. Es werden von der Quelle (z.B. einer Kamera) Dateneinheiten über den Übertragungskanal und nach einer Pufferung im Ausgabepuffer an die Senke geliefert. Die Übertragung der Dateneinheiten vom Ausgabepuffer zur Senke wird mittels eines Pufferungssteuerungsprotokolls durchgeführt, wodurch Änderungen im Übertragungsverhalten im Übertragungskanal ausgeglichen werden.

Der Erfindung liegt die Aufgabe zugrunde, ausgehend von dem Übertragungssystem der eingangs genannten Art ein verbessertes Übertragungssystem anzugeben.

Diese Aufgabe wird erfindungsgemäß dadurch gelöst, daß erste Mittel zur Zeitsteuerung der Übertragung der Dateneinheiten von der gespeicherte Daten enthaltenden Datenquelle zum Datenpuffer vorgesehen sind.

Dadurch wird erreicht, daß an die Datenquelle, deren Zeitsteuerung und die Datenübertragungswege des Übertragungssystems (von der Datenquelle zum Datenpuffer) geringere Qualitätsanforderungen gestellt werden können. Dennoch ist eine Echtzeit-Datenausgabe an der Datensenke möglich. Die Datenübertragung von der Datenquelle zum Datenpuffer erfolgt nach dem Starten selbstständig, ohne daß die Dateneinheiten einzeln abgerufen werden müssen. Kleinere zeitliche Störungen dieser Datenübertragung beeinflussen die Datenübertragung vom Datenpuffer zur Datensenke nicht, da diese Datenübertragung mittels einer eigenen separaten Zeitsteuerung erfolgt. Da dieser Datenübertragungspfad nur sehr kurz ist, können kaum Störungen auftreten, so daß die Datenausgabe in Echtzeit an der Datensenke gewährleistet ist. Wäre nur die Datenübertragung vom Datenpuffer an die Datensenke zeitgesteuert, nicht aber die Datenübertragung von der Datenquelle bis zum Datenpuffer, würde das Problem auftreten, daß bei gleichzeitigem Zugriff mehrerer Benutzer auf dieselben Daten derselben Datenquelle diese durch die Vielzahl der Datenanforderung überlastet wäre. Bei einem Übertragungssystem, bei dem die Datenübertragung zeitgesteuert von der Datenquelle direkt bis zur Datensenke erfolgen würde, wären sehr hohe Qualitätsanforderungen an die Datenquelle und deren Zeitsteuerung zu stellen. Außerdem wäre bei einem solchen Übertragungssystem der kritische Datenpfad von der Datenquelle über das Netzwerk bis zur Datensenke verhältnismäßig lang, so daß leicht Zeitverzögerungen und Störungen bei der Datenübertragung auftreten könnten.

Eine Ausgestaltung der Erfindung sieht vor, daß die ersten Mittel ein Datenquellen-Steuermodul zur Steuerung der Datenquelle aufweisen, wobei das Datenquellen-Steuermodul zur Übertragung von Dateneinheiten von der Datenquelle zum Datenpuffer jeweils einen Steuerbefehl an die Datenquelle ausgibt, und daß die zweiten Mittel ein Datensenken-Steuermodul zur Steuerung der Datensenke und des Datenpuffers aufweisen, wobei das Datensenken-Steuermodul zur Übertragung von Dateneinheiten vom Datenpuffer zur Datensenke jeweils einen Steuerbefehl an den Datenpuffer ausgibt. Die Steuermodule steuern selbstständig die ihnen zugeordneten Elemente entsprechend einem Datenstromsteuerungsprotokoll. Jedes Netzelement mit einer Datenquelle oder einer Datensenke weist pro Datenquelle bzw. Datensenke ein solches Steuermodul auf.

Eine davon ausgehende Weiterbildung sieht vor, daß eine Steuereinheit für die Ausgabe eines Startbefehls an die Steuermodule zum Starten der Datenübertragung von einem Netzelement zu einem weiteren Netzelement vorgesehen ist. Die Steuermodule sind mit der Steuereinheit über Steuerleitungen verbunden und erhalten von dieser die Befehle zum Starten und Stoppen der Datenübertragung. Bei dieser Weiterbildung muß die Steuereinheit also nur einen einzigen Startbefehl an jedes beteiligte Steuermodul weitergeben, die dann selbstständig die Zeitsteuerung der zugeordneten Datenquelle bzw. Datensenke des zugeordneten Datenpuffers übernehmen. Zum Stoppen der Datenübertragung gilt analog, daß die Steuereinheit lediglich einen einzigen Stoppbefehl an jedes Steuermodul weitergibt. Dies hat den Vorteil, daß die Steuereinheit, die als separates Netzelement oder auf einem der andereren Netzelemente angeordnet sein kann, einfacher ausfallen kann, und daß die Datenquellen bzw. Datensenken und Datenpuffer jeweils unabhängig voneinander gesteuert werden können.

Eine bevorzugte Weiterbildung der Erfindung sieht vor, daß das Datensenken-Steuermodul zur Steuerung des Datenpuffers derart ausgestaltet ist, daß zur Datenausgabe die Daten in zeitgleichen Abständen vom Datenpuffer zur Datensenke übertragen werden. Dadurch wird die zeitlich genaue Ausgabe von Daten entsprechend einer vorher bestimmten zeitlichen Abfolge z.B. in Echtzeit erreicht.

In einer vorteilhaften Ausgestaltung der Erfindung ist vorgesehen, daß die Steuereinheit zur Ausgabe von Startbefehlen an die Datensenken-Steuermodule zur Synchronisierung der Datenausgabe an mehreren Datensenken mit je einem zugeordneten Datenpuffer derart ausgestaltet ist, daß die Datenübertragung von den Datenpuffern an die Datensenken zeitgleich gestartet wird. Die Datensenken mit den zugeordneten Datenpuffern können dabei auf demselben oder auf verschiedenen Netzelementen angeordnet sein. Die Datenübertragung von der Datenquelle an die Datenpuffer kann bei dieser Ausgestaltung gleichzeitig oder zeitlich versetzt zu einem beliebigen Zeitpunkt vor der synchronisierten Datenübertragung von den Datenpuffern an die Datensenken erfolgen. Die Steuereinheit gibt anfangs einen Startbefehl an die Datensenken-Steuermodule weiter mit der Aufforderung, die Datenübertragung von den Datenpuffern an die Datensenken zeitgleich zu starten. Dabei werden von der Steuereinheit verschiedene Parameter an die Datensenken-Steuermodule weitergegeben, die einen Zeitabgleich der Steuermodule bewirken und die synchronisierte Datenausgabe ermöglichen.

Ein davon ausgehende Weiterbildung sieht vor, daß die Steuereinheit zur Steuerung der Datenquellen-Steuermodule derart ausgestaltet ist, daß die Dateneinheiten zeitversetzt von der Datenquelle an die Datenpuffer übertragen werden. Dies ermöglicht eine Reduzierung der Größe der Datenpuffer und eine Reduzierung der zeitlichen Anforderungen an die Übertragungsleitungen von der Datenquelle an die Datenpuffer.

Die Erfindung betrifft auch ein Netzelement mit einer Datenquelle für ein eingangs genanntes Übertragungssystem, wobei das Netzelement erste Mittel zur Zeitsteuerung der Übertragung der Dateneinheiten von der gespeicherte Daten enthaltenden Datenquelle zum Datenpuffer enthält.

Die Erfindung betrifft außerdem ein Verfahren zur Datenübertragung in einem eingangs genannten Übertragungssystem, wobei einzelne Dateneinheiten zeitgesteuert von der gespeicherte Daten enthaltenden Datenquelle (8) zum Datenpuffer (11) übertragen werden.

Die Erfindung wird nachfolgend anhand der Zeichnung näher erläutert. Es zeigen:
- Fig. 1: ein einfaches Blockschaltbild eines erfindungsgemäßen Übertragungssystems mit zwei Netzelementen,
- Fig. 2: einen Ablaufplan der Datenübertragung bei dem erfindungsgemäßen Übertragungssystem,
- Fig. 3: einen Protokollablaufplan beim Einzelschrittmodus und
- Fig. 4: einen Protokollablaufplan beim kontinuierlichen Datenausgabemodus.

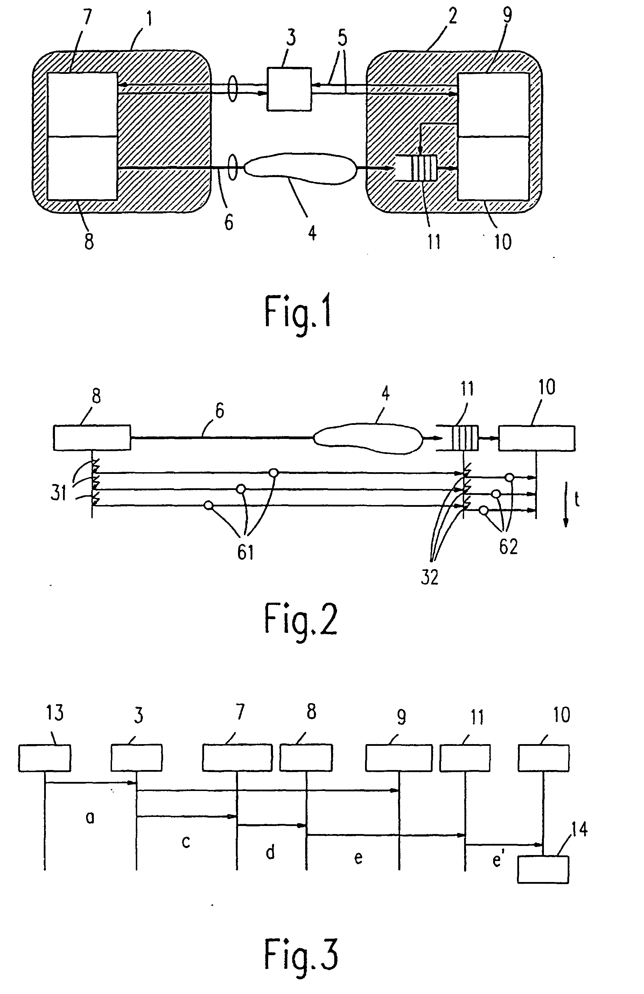

In Fig. 1 ist ein Übertragungssystem gezeigt mit zwei Netzelementen, beispielsweise einem Videoserver 1, auf dem Videodaten gespeichert sind, und einer Arbeitsstation 2, auf der Anwendungen wie das Recherchieren in Datenmaterial und das Erstellen von Nachrichtenbeiträgen laufen. Der Videoserver 1 weist eine Datenquelle 8 auf, die beispielsweise eine Speichereinheit (z.B. eine Festplatte) sein kann zum Speichern der Videodaten, und ein der Datenquelle 8 zugeordnetes Datenquellen-Steuermodul 7. Die Arbeitsstation 2 weist eine Datensenke 10 auf, die beispielsweise eine Speichereinheit oder eine Ausgabeeinheit sein kann, ein der Datensenke 10 zugeordnetes Datensenken-Steuermodul 9 sowie einen Datenpuffer 11 zum Zwischenspeichern von Daten. Eine zentrale Steuereinheit 3, die an beliebiger Stelle des Übertragungssystems angeordnet sein kann, beispielsweise auch auf den Netzelementen 1 und 2, kommuniziert über bidirektionale Steuerleitungen 5 mit den Steuermodulen 7 und 9. Die Netzelemente 1, 2 stehen weiterhin über eine oder mehrere unidirektionale Datenleitungen 6 in Verbindung, die sich über das gesamte, symbolisch dargestellte Netzwerk 4 erstrecken können und über die Daten von der Datenquelle 8 an den Datenpuffer 11 und von dort an die Datensenke 10 übertragen werden können. Das Übertragungssystem umfaßt natürlich eine Vielzahl weiterer Netzelemente 1, 2, die in der gezeigten Weise über Steuerleitungen 5 und Datenleitungen 6 miteinander verbunden sind.

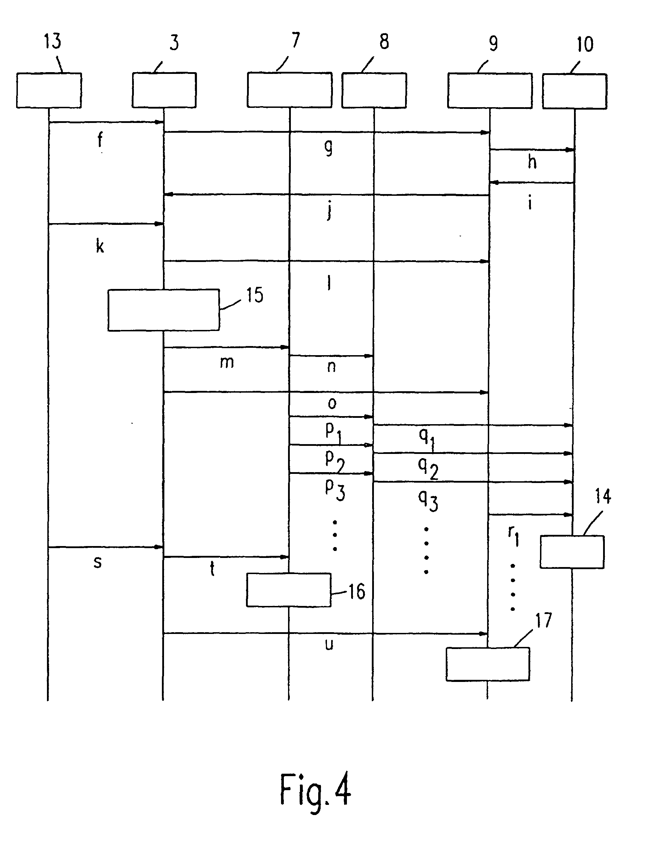

Ein Ablaufschema der kontinuierlichen Datenübertragung bei einem erfindungsgemäßen Übertragungssystem zeigt Fig. 2. Sowohl die Übertragung der Dateneinheiten 61 von der Datenquelle 8 an den Datenpuffer 11 ist zeitgesteuert (symbolisch durch Pfeile 31 angedeutet), als auch die anschließende Übertragung der Dateneinheiten 62, die den Dateneinheiten 61 entsprechen, vom Datenpuffer 11 an die Datensenke 10 (Pfeile 32). Die Zeitsteuerung 32 ist dabei entkoppelt von der Zeitsteuerung 31. Die Zeitachse t verdeutlicht die zeitlich nacheinander erfolgende Übertragung mehrerer einzelner Dateneinheiten 61 bzw. 62. Der kritische Datenpfad, auf dem Störungen auftreten können, reicht hier nur vom Datenpuffer 11 bis zur Datensenke 10. Nur die dazwischen erfolgende Datenübertragung muß hohen zeitlichen Anforderungen genügen, um eine kontinuierliche Datenausgabe an der Datensenke 10 (z.B. einem Monitor) oder eine Weiterverarbeitung an der Datensenke 10 zu gewährleisten. Bei entsprechender Größe des Datenpuffers 11 können die Anforderungen an die Datenleitungen 6 und die Datenquelle 8 verringert werden. Außerdem sind auch keine Befehle (data requests) erforderlich, mit denen jeweils eine einzelne Dateneinheit 61 von der Datenquelle 8 angefordert werden muß. Eine Überlastung des Netzwerkes 4 aufgrund einer Vielzahl von Anforderungsbefehlen bei einer Vielzahl von Datenanforderungen von verschiedenen Datensenken 10 bei derselben Datenquelle 8 ist deshalb nicht möglich. Datenstromsteuerungsprotokolle für die Datenübertragung bei einem erfindungsgemäßen Übertragungssystem sollen nachfolgend anhand der Figuren 3 und 4 erläutert werden.

Ein Ablaufprotokoll für den Einzelschritt-Ausgabemodus ist in Fig. 3 gezeigt. Der Benutzer 13 erteilt zunächst den Befehl, beispielsweise an der Arbeitsstation 2, einen Einzelschritt auszuführen, z.B. ein Einzelbild an einer bestimmten Position einer Videosequenz darzustellen. Dieser Befehl wird an die Steuereinheit 3 des Datenstromsteuerungsprotokolls weitergegeben (Schritt a). Die Steuereinheit 3 gibt zunächst an das Datensenken-Steuermodul 9 den Befehl, den Datenpuffer 11 zu leeren (b). Anschließend erhält das Datenquellen-Steuermodul 7 den Befehl (c), die Datenquelle 8 zu aktivieren und die angeforderte Dateneinheit zu generieren (d). Bei den Schritten (a), (c), (d) werden jeweils die Positionsparameter übergeben, die die Position der angeforderten Dateneinheit beschreiben. Die Datenquelle generiert nun die angeforderte Dateneinheit, liest z.B. die entsprechenden Daten vom Speicherelement (z.B. einer Festplatte), und überträgt die Dateneinheit an den Datenpuffer (e), der die Dateneinheit weitergibt an die Datensenke 10 (e'). Über eine Ausgabeeinheit 14, z.B. einen Monitor, wird die Dateneinheit dort sofort an den Benutzer 13 ausgegeben.

In Fig. 4 ist ein Protokoll für den kontinuierlichen Datenausgabemodus gezeigt. Zunächst erfolgt vom Benutzer 13 die Anforderung der kontinuierlichen Datenausgabe. Diese Anforderung wird an die Steuereinheit 3 weitergegeben (f). Dabei werden eine Reihe von Parametern gesetzt, die die auszugebenden Daten, z.B. eine Videosequenz, beschreiben. Der Benutzer 13 setzt dazu auch die zeitlichen Parameter. Die Parameter, die den angeforderten Datenstrom beschreiben, wie insbesondere Anfangs- und Endposition, Länge der Dateneinheiten, Ausgabegeschwindigkeit, usw. werden der Steuereinheit 3 zugänglich gemacht, was hier nicht gezeigt ist. Die Steuereinheit 3 fordert außerdem das Datensenken-Steuermodul 9 auf (g), von der Datensenke 10 den Parameterwert der internen Verzögerung (Zeitdauer zwischen der Übergabe einer Dateneinheit an die Datensenke 10 und der tatsächlichen Ausgabe der Dateneinheit) auszulesen (h, i) und an die Steuereinheit 3 weiterzureichen (j). Nun kann der Benutzer 13 den Befehl geben, die Datenausgabe an einer bestimmten Position des Datenstromes zu starten, was an die Steuereinheit 3 weitergereicht wird (k), die das Datensenken-Steuermodul 9 instruiert, den Datenpuffer (11, nicht gezeigt in Fig. 4) zu leeren (1). Nachdem die Steuereinheit 3 die erforderlichen Startparameter generiert hat (Schritt 15), instruiert sie das Datenquellen-Steuermodul 7 (m), die Datenübertragung von der Datenquelle 8 an die Datensenke 10 (bzw. den davor liegenden Datenpuffer) sofort zu starten. Dazu werden die erforderlichen Parameter vom Datenquellen-Steuermodul 7 an die Datenquelle 8 weitergereicht (n). Die Steuereinheit 3 instruiert außerdem das Datensenken-Steuermodul 9, die Datenausgabe an der Datensenke 10 zu starten (o), jedoch zeitverschoben um einen Zeit-Offset. Dieser Zeit-Offset setzt sich zusammen aus den Übertragungsverzögerungen (Zeitdauer von der Übergabe des Startbefehls von der Steuereinheit 3 an das Steuermodul 7 bis zum Eingang der ersten Dateneinheit bei der Datensenke 10 und dem Vorlade-Pufferfüllstand (preload buffer level) abzüglich der internen Zeitverzögerung der Datensenke 10. Anschließend wird die Datenquelle 8 durch einzelne Steuerbefehle von dem Datenquellen-Steuermodul 7 veranlaßt (p₁, p₂, p₃) jeweils eine Dateneinheit in den vorstimmten Zeitabständen an die Datensenke 10 zu übertragen (q₁, q₂, q₃). Die Datenausgabe selbst (Block 14) der einzelnen Dateneinheiten wird durch Steuerbefehle von dem Datensenken-Steuermodul 9 an die Datensenke 10 aktiviert (r₁). Zur Datenausgabe übernimmt die Datensenke 10 nacheinander jeweils eine Dateneinheit aus dem (nicht dargestellten) Datenpuffer.

Zum Stoppen der Datenausgabe gibt der Benutzer 13 einen Stoppbefehl ein, der an die Steuereinheit 3 weitergereicht wird (s). Diese reicht den Stoppbefehl an die Steuermodule 7, 9 weiter (t, u), die sofort die Datenquelle 8 bzw. die Datensenke 10 blockieren (Schritte 16, 17).

Eine Stopposition kann auch bereits vor dem Starten der Datenübertragung gesetzt sein. Das Datenquellen-Steuermodul 7 gibt dann beim Erreichen der Stopposition oder beim Erreichen der Anfangs- oder Endposition des zu übertragenden Datenstroms eine entsprechende Meldung an die Steuereinheit 3 weiter. Außerdem wird eine Markierung am Ende der letzten Dateneinheit gesetzt, die vom Datensenken-Steuermodul 9 erkannt wird und die daraufhin die Datensenke 10 deaktiviert.

Die Datenausgabe kann inhaltlich in beliebiger Richtung und mit beliebiger Geschwindigkeit erfolgen. Eine verlangsamte Datenausgabe kann in beliebiger Richtung und mit beliebiger Geschwindigkeit erfolgen. Eine verlangsamte Datenausgabe beispielsweise durch mehrfaches aufeinanderfolgendes Ausgeben einer Dateneinheit erreicht, eine beschleunigte Datenausgabe durch Weglassen von Dateneinheiten.

Mit dem erfindungsgemäßen Übertragungssystem kann auch eine synchronisierte Übertragung verschiedener Datenströme von verschiedenen Datenquellen an eine oder mehrere (unterschiedliche) Datensenken erreicht werden. Zum Beispiel soll ein Audio- und ein Videostrom synchron an einem Netzelement durch zwei Datensenken ausgegeben werden. Dazu wird für jeden Datenstrom ein eigner Parametersatz generiert. Wenn verschiedene Datenströme synchron ausgegeben werden sollen, werden die Datenquellen so gesteuert, daß die Dateneinheiten unterschiedlicher Datenströme um ggf. unterschiedliche interne Verzögerungen der Datensenken zeitlich versetzt übertragen werden. Dadurch wird die Größe des Datenpuffers der Datensenke verringert. Wenn verschiedene Datenströme auf unterschiedlichen Netzelementen synchronisiert ausgegeben werden sollen, ist es erforderlich, die Systemuhren der zugehörigen Netzelemente zu synchronisieren, was mit bekannten Mitteln möglich ist.

Zur Sicherstellung der richtigen Reihenfolge bei der Ausgabe der Dateneinheiten kann jeder Dateneinheit bei der Übertragung von der Datenquelle zum Datenpuffer bzw. zur Datensenke ein Zähler mitgegeben werden, der nach jeder Dateneinheit erhöht wird.

Die Erfindung kann außer bei einem Nachrichtenbearbeitungssystem beispielsweise auch eingesetzt werden zur medizinischen Ferndiagnose, bei der Videosequenzen (z.B. Ultraschallaufnahmen des Herzens) gleichzeitig von mehreren Ärzten an unterschiedlichen Orten betrachtet werden sollen. Auch zur Übertragung von Daten im Internet oder in Kommunikationsnetzen (z.B. Videokonferenzen, Bildtelephonie) ist die Erfindung einsetzbar.

## Patentansprüche

1. Übertragungssystem mit mehreren Netzelementen (1, 2) zur Übertragung mehrerer Dateneinheiten von mindestens einer Datenquelle (8) eines Netzelements (1) zu mindestens einem weiteren Netzelement (2) mit einer Datensenke (10) und einem Datenpuffer (11), wobei zweite Mittel (9) zur Zeitsteuerung der Datenübertragung vom Datenpuffer (11) zur Datensenke (10) vorgesehen sind,
**dadurch gekennzeichnet,**
**daß** erste Mittel (7) zur Zeitsteuerung der Übertragung der Dateneinheiten von der gespeicherte Daten enthaltenden Datenquelle (8) zum Datenpuffer (11) vorgesehen sind.

2. Übertragungssystem nach Anspruch 1,
**dadurch gekennzeichnet, daß** die ersten Mittel ein Datenquellen-Steuermodul (7) zur Steuerung der Datenquelle (8) aufweisen, wobei das Datenquellen-Steuermodul (7) zur Übertragung von Dateneinheiten von der Datenquelle (8) zum Datenpuffer (11) jeweils einen Steuerbefehl an die Datenquelle (8) ausgibt, und daß die zweiten Mittel ein Datensenken-Steuermodul (9) zur Steuerung der Datensenke (10) und des Datenpuffers (11) aufweisen, wobei das Datensenken-Steuermodul (9) zur Übertragung von Dateneinheit vom Datenpuffer (11) zur Datensenke (10) jeweils einen Steuerbefehl an den Datenpuffer (11) ausgibt.

3. Übertragungssystem nach Anspruch 2,
**dadurch gekennzeichnet, daß** eine Steuereinheit (3) für die Ausgabe eines Startbefehls an die Steuermodule (7, 9) zum Starten der Datenübertragung von einem Netzelement (1) zu einem weiteren Netzelement (2) vorgesehen ist.

4. Übertragungssystem nach Anspruch 2 oder 3,
**dadurch gekennzeichnet, daß** das Datensenken-Steuermodul (9) zur Steuerung des Datenpuffers (11) derart ausgestaltet ist, daß zur Datenausgabe die Daten in zeitgleichen Abständen vom Datenpuffer (11) zur Datensenke (10) übertragen werden.

5. Übertragungssystem nach 3 oder 4,
**dadurch gekennzeichnet, daß** die Steuereinheit (3) zur Ausgabe von Startbefehlen an die Datensenken-Steuermodule (9) zur Synchronisierung der Datenausgabe an mehreren Datensenken (10) mit je einem zugeordneten Datenpuffer (11) derart ausgestaltet ist, daß die Datenübertragung von den Datenpuffern (11) an die Datensenken (9) zeitgleich gestartet wird.

6. Übertragungssystem nach Anspruch 5,
**dadurch gekennzeichnet, daß** die Steuereinheit (3) zur Steuerung der Datenquellen-Steuermodule (7) derart ausgestaltet ist, daß die Dateneinheiten zeitversetzt von der Datenquelle (8) an die Datenpuffer (11) übertragen werden.

7. Netzelement (1) für ein Übertragungssystem, wobei das Netzelement (1) eine Datenquelle aufweist, zur Übertragung mehrerer Dateneinheiten von mindestens einer Datenquelle (8) zu mindestens einem weiteren Netzelement (2) mit einer Datensenke (10) und einem Datenpuffer (11),
**dadurch gekennzeichnet,**
**daß** das Netzelement (1) erste Mittel (7, 8) zur Zeitsteuerung der Übertragung der Dateneinheiten von der gespeicherte Daten enthaltenden Datenquelle (8) zum Datenpuffer (11) enthält.

8. Verfahren zur Datenübertragung mehrerer Dateneinheiten von mindestens einer Datenquelle (8) eines Netzelements (1) zu mindestens einem weiteren Netzelement (2) mit einer Datensenke (10) und einem Datenpuffer (11), wobei die Übertragung vom Datenpuffer (11) zur Datensenke (10) zeitgesteuert erfolgt,
**dadurch gekennzeichnet,**
**daß** einzelne Dateneinheiten zeitgesteuert von der gespeicherte Daten enthaltenden Datenquelle (8) zum Datenpuffer (11) und anschließend zeitgesteuert vom Datenpuffer (11) zur Datensenke übertragen werden.

## Claims

1. A transmission system, including a plurality of network elements (1, 2) for the transmission of a plurality of data units from at least one data source (8) of a network element (1) to at least one further network element (2) which includes a data sink (10) and a data buffer (11), wherein second means (9) for the temporal control of the data transmission from the data buffer (11) to the data sink (10) are provided,
**characterized in that** there are provided first means (7) for the temporal control of the transmission of the data units from the data source (8) containing stored data to the data buffer (11).

2. A transmission system as claimed in Claim 1,
**characterized in that** the first means include a data source control module (7) for controlling the data source (8), the data source control module (7) each time supplying a control instruction to the data source (8) for the transmission of data units from the data source (8) to the data buffer (11), and that the second means include a data sink control module (9) for controlling the data sink (10) and the data buffer (11), the data sink control module (9) supplying a respective control instruction to the data buffer (11) for the transmission of data units from the data buffer (11) to the data sink (10).

3. A transmission system as claimed in Claim 2,
**characterized in that** there is provided a control unit (3) for outputting a start instruction to the control module (7, 9) in order to start the data transmission from a network element (1) to a further network element (2).

4. A transmission system as claimed in Claim 2 or 3,
**characterized in that** in order to control the data buffer (11) the data sink control module (9) is constructed in such a manner that for data output the data is transmitted from the data buffer (11) to the data sink (10) at equal distances in time.

5. A transmission system as claimed in Claim 3 or 4,
**characterized in that** the control unit (3) is arranged to output start instructions to the data sink control module (9) in order to synchronize the data output at a plurality of data sinks (10), each of which includes an associated data buffer (11), in such a manner that the data transmission from the data buffers (11) to the data sinks (10) is started simultaneously.

6. A transmission system as claimed in Claim 5,
**characterized in that** the control unit (3) for controlling the data source control module (7) is constructed in such a manner that the data units are transmitted from the data source (8) to the data buffer (11) in a temporally offset manner.

7. A network element (1) for a transmission system, which network element (1) includes a data source for the transmission of a plurality of data units from at least one data source (8) to at least one further network element (2) which includes a data sink (10) and a data buffer (11),
**characterized in that** the network element (1) includes first means (7, 8) for the temporal control of the transmission of the data units from the data source (8) containing stored data to the data buffer (11).

8. A method for the transmission of a plurality of data units from at least one data source (8) of a network element (1) to at least one further network element (2) which includes a data sink (10) and a data buffer (11), wherein the transmission from the data buffer (11) to the data sink (10) takes place in a temporally controlled manner,
**characterized in that** individual data units are transmitted in a temporally controlled manner from the data source (8) containing stored data to the data buffer (11) and subsequently in a temporally controlled manner from the data buffer (11) to the data sink.

## Revendications

1. Système de transmission avec plusieurs éléments de réseau (1, 2) pour la transmission de plusieurs unités de données d'au moins une source de données (8) d'un élément de réseau (1) vers au moins un élément de réseau (2) supplémentaire avec un puits de données (10) et un tampon de données (11), dans lequel des deuxièmes moyens (9) sont prévus pour la temporisation de la transmission de données du tampon de données (11) vers le puits de données (10),
**caractérisé en ce**
**que** des premiers moyens (7) sont prévus pour la temporisation de la transmission des unités de données de la source de données (8) contenant les données enregistrées vers le tampon de données (11).

2. Système de transmission selon la revendication 1,
**caractérisé en ce**
**que** les premiers moyens présentent un module de commande de source de données (7) pour la commande de la source de données (8), le module de commande de source de données (7) délivrant respectivement un ordre de commande à la source de données (8) en vue de la transmission d'unités de données de la source de données (8) vers le tampon de données (11) et que les deuxièmes moyens présentent un module de commande de puits de données (9) pour la commande du puits de données (10) et du tampon de données (11), le module de commande de puits de données (9) délivrant respectivement un ordre de commande au tampon de données (11) pour la transmission de l'unité de données du tampon de données (11) vers le puits de données (10).

3. Système de transmission selon la revendication 2,
**caractérisé en ce**
**qu'**une unité de commande (3) est prévue pour la sortie d'un ordre de démarrage aux modules de commande (7, 9) pour le démarrage de la transmission de données d'un élément de réseau (1) vers un autre élément de réseau (2).

4. Système de transmission selon l'une des revendications 2 ou 3,
**caractérisé en ce**
**que** le module de commande de puits de données (9) est conçu pour la commande du tampon de données (11) de telle sorte que, pour la sortie de données, les données soient transmises à intervalles réguliers du tampon de données (11) vers le puits de données (10).

5. Système de transmission selon l'une des revendications 3 ou 4,
**caractérisé en ce**
**que** l'unité de commande est conçue pour la sortie d'ordres de démarrage aux modules de commande du puits de données (9) en vue de la synchronisation de la sortie de données à plusieurs puits de données (10) avec un tampon de données (11) respectivement affecté de telle sorte que la transmission de données des tampons de données (11) vers les puits de données démarre simultanément.

6. Système de transmission selon la revendication 5,
**caractérisé en ce**
**que** l'unité de commande (3) est conçue pour la commande du module de commande de source de données (7) de telle sorte que les unités de données soient transmises avec un décalage temporel de la source de données (8) au tampon de données (11).

7. Elément de réseau pour un système de transmission, dans lequel l'élément de réseau (1) présente une source de données en vue de la transmission de plusieurs unités de données d'au moins une source de données (8) vers au moins un élément de réseau supplémentaire (2) avec un puits de données (10) et un tampon de données (11),
**caractérisé en ce**
**que** l'élément de réseau (1) contient des premiers moyens (7, 8) pour la temporisation de la transmission des unités de données de la source de données (8) contenant les données enregistrées vers le tampon de données (11).

8. Procédé de transmission de données de plusieurs unités de données d'au moins une source de données (8) d'un élément de réseau (1) vers au moins un élément de réseau (2) supplémentaire avec un puits de données (10) et un tampon de données (11), la transmission du tampon de données (11) vers le puits de données (10) étant effectuée de manière temporisée,
**caractérisé en ce**
**que** des unités de données individuelles sont transmises de manière temporisée de la source de données (8) contenant les données enregistrées vers le tampon de données (11) et, ensuite, de manière temporisée, du tampon de données (11) vers le puits de données.
